# EUROPEAN PATENT APPLICATION

(11) **EP 4 671 560 A1**
(43) Date of publication of application: **31.12.2025**
(21) Application number: 23930439.7
(22) Date of filing: 29.03.2023
(51) Int. Cl.: F16D 25/12, F16D 48/02

(54) **CLUTCH CONTROL DEVICE**

(71) Applicant: HONDA MOTOR CO., LTD., Tokyo 105-8404 (JP)
(72) Inventor: ONO, Junya, Tokyo 107-8556 (JP); ITO, Asuka, Tokyo 107-8556 (JP); ISHII, Daichi, Tokyo 107-8556 (JP); RYUZAKI, Tatsuya, Tokyo 107-8556 (JP); KAIBE, Yuma, Tokyo 107-8556 (JP); YOSHIDA, Masahiro, Tokyo 107-8556 (JP); TSUZUKI, Ryohei, Tokyo 107-8556 (JP)
(74) Representative: Kiwit, Benedikt
(86) International application number: PCT/JP2023/012867
(87) International publication number: WO 2024/201801

(57) **Abstract**

The clutch control device (40A) is provided with a clutch device (26), a clutch actuator (50), and a control unit (40), wherein the control unit (40) has an automatic control mode (M1) in which the clutch device (26) is automatically operated by driving the clutch actuator (50) and a manual control mode (M2) in which the clutch device (26) is manually operated by operation input to a clutch operator (4b) operated by a driver, and the control unit (40) shifts to a forced manual control mode in which only the manual control mode (M2) can be selected according to the wear state of the clutch device (26).

## Description

### TECHNICAL FIELD

The present invention relates to a clutch control device.

### BACKGROUND ART

A semi-automatic transmission system is disclosed in which a clutch disposed on a torque transmission path from an engine to wheels is operated by an actuator, or a transmission disposed downstream of the clutch is also operated by an actuator in addition to the operation of the clutch (see, for example, Patent Document 1).

In the semi-automatic transmission system having such transmission and the clutch, when the driver operates the shift button or the shift pedal to instruct gear switching, the actuator first disconnects the clutch to interrupt the transmission torque transmission, and then the gear shift operation of the transmission is performed. Further, after the gear shift operation in the transmission, the clutch connection operation, that is, the control for shifting the clutch from the non-engaged state to the engaged state, is performed by the actuator. When the vehicle stops, the gear of the transmission is automatically shifted to the low speed side in accordance with the decrease in the vehicle speed, and when the vehicle restarts after stopping, the vehicle can start from the low speed gear, that is, the low gear (first gear).

In the meantime, there is known a semi-automatic transmission system of a type used in a motorcycle or the like, in which the driver performs the gear shifting operation of the transmission and only the connecting and disconnecting operation of the clutch of the transmission is automatically performed. In the case of the transmission system which automatically performs only the clutch connection / disconnection operation as described above, even if the vehicle decelerates, the gear of the transmission is not automatically shifted to the low speed side unless the driver performs the gear shift operation of the transmission. As a result, if the vehicle is stopped without performing the gear shift operation and the vehicle is restarted in a state where the driver does not recognize that the gear position is a high gear, for example, a second gear or higher, the desired acceleration cannot be achieved, and a large load is applied to the clutch, which may cause partial wear of the clutch.

### Citation List

### Patent Document

Patent Document 1: Japanese Unexamined Patent Application, First Publication No. 2009-264519

### SUMMARY OF INVENTION

### Technical Problem

A clutch control device capable of manual and automatic clutch operation reduces the load on a clutch device by reducing the chance of high-gear start. The present invention is directed to improving operability in order to solve the above problem. This will further improve traffic safety and contribute to the development of a sustainable transport system.

### Solution to Problem

A clutch control device (40A) is provided with a clutch device (26) that is configured to disconnect and connect power transmission between a prime mover (13) and an output object (21) of a vehicle (1), a clutch actuator (50) that is configured to operate the clutch device (26), and a control unit (40) that is configured to control the drive of the clutch actuator (50), wherein the control unit (40) has an automatic control mode (M1) that automatically operates the clutch device (26) by driving the clutch actuator (50) and a manual control mode (M2) that manually operates the clutch device (26) by operation input to a clutch operator (4b) operated by a driver, and the control unit (40) shifts to a forced manual control mode, which can select only the manual control mode (M2), according to the wear state of the clutch device (26).

According to this configuration, when the clutch wear is considered, by selecting only the manual control mode in which the high-gear start by the automatic control cannot be performed, it is possible to suppress the continuation of the clutch wear due to the repetition of the high-gear start while maintaining the state in which the vehicle can travel. As a result, the durability of the clutch device can be improved.

In a second aspect of the present invention, according to the above mentioned first aspect, the clutch device (26) transmits power by frictional engagement of a clutch plate (35), and the control unit (40) shifts to the forced manual control mode when the amount of wear of the clutch plate (35) becomes a threshold value or more.

According to this configuration, when the amount of wear of the clutch plate becomes equal to or greater than the threshold value, it is determined that the wear of the clutch device is progressing, and the clutch control mode is shifted to the forced manual control mode, whereby the clutch control mode can be accurately limited based on direct information relating to the clutch wear.

In third aspect of the present invention, according to the above mentioned first or second aspect, an angle sensor (56d) configured to detect the rotation angle of a transmission element (56) of the clutch actuator (50) is further provided, and the control unit (40) shifts to the forced manual control mode when a value detected by the angle sensor (56d) has increased by a predetermined amount or more from an initial value at a time when a touch point (TP), at which the clutch device (26) starts connecting, has reached during a connection of the clutch device (26).

According to this configuration, when the rotation angle of the transmission element of the clutch actuator increases by a prescribed amount or more in the half clutch region after the touch point, it is determined that the wear of the clutch device is progressing, and the clutch device is shifted to the forced manual control mode, whereby the clutch control mode can be accurately and conveniently limited by using an angle sensor that can also be used for drive control of the clutch actuator.

In a fourth aspect of the present invention, according to any one of the above mentioned first to third aspects, when the control unit (40) shifts to the forced manual control mode from a next driving cycle via ON/OFF of a main switch of the vehicle (1) when the control unit (40) has determined that a set condition relating to a wear of the clutch device (26) is satisfied.

According to this configuration, even when the setting condition relating to the wear of the clutch device is satisfied and the clutch control mode is limited, the clutch control mode is not limited during the current driving cycle, so that the driver can be notified of the shift to the forced manual control mode when the main switch is turned ON/ OFF, and the driver can easily accept the limitation of the clutch control mode.

In a fifth aspect of the present invention, according to any one of the above mentioned first to fourth aspects, when the vehicle (1) decelerates and when a gear shift position of the transmission (21) of the vehicle (1) is on the high speed side with respect to the vehicle speed, a notification is made to the driver that the gear shift position is on the high speed side.

According to this configuration, when the vehicle is decelerated and the shift position of the transmission is high with respect to the vehicle speed, the driver is notified, thereby urging the driver to shift down and increasing the certainty that the shift position is returned to the position corresponding to the low gear, especially before the vehicle stops. This reduces the frequency of starting the vehicle at the high-gear shift position, and reduces the load on the clutch device.

In a sixth aspect of the present invention, according to the above mentioned fifth aspect, when the vehicle (1) starts traveling while the gear shift position remains on the high speed side, a notification is made to a driver that the transmission has the gear shift position on the high speed side.

According to this configuration, the driver is notified that the gear shift position is on the high speed side when the vehicle starts, so that the frequency of starting while the gear shift position is on the high speed side can be further reduced, and the load on the clutch device can be further reduced.

In a seventh aspect of the present invention, according to the above mentioned fifth or sixth aspect, when the vehicle (1) starts traveling, the control unit (40) performs a half clutch control so that the engine rotation number becomes equal to or higher than a vehicle starting rotation number (Ne), and the control unit (40) reduces the vehicle starting rotation number (Ne) when the vehicle (1) starts traveling while the gear shift position is kept on the high speed side, compared with a case where the vehicle (1) starts traveling when the gear shift position is on the low speed side.

According to this configuration, when the gear shift position of the transmission is on the high speed side, the vehicle starting rotation number is reduced as compared with when the gear shift position of the transmission is on the low speed side, and thus it is possible to suppress the clutch load due to the half clutch at the time of travel starting at the gear shift position on the high speed side.

In an eighth aspect of the present invention, according to any one of the above mentioned first to eighth aspects, a notification is made to a driver that the forced manual control mode is in effect while shifting to the forced manual control mode.

According to this configuration, by notifying the driver that the clutch control mode is the forced manual control mode, it is possible to suppress erroneous operations such as the driver misidentifying the clutch control mode as the automatic control mode and performing the in-gear operation without performing the clutch operation. Advantageous Effects of Invention

According to the present invention, in the clutch control device capable of performing manual operation and automatic operation of the clutch, it is possible to reduce the opportunity of high-gear start and to reduce the load of the clutch device.

### BRIEF DESCRIPTION OF DRAWINGS

[FIG. 1] A right side view of a motorcycle according to an embodiment of the present invention.
[FIG. 2] A cross-sectional view of a gearbox and a change mechanism of the motorcycle.
[FIG. 3] A block diagram of the gear shift system of the motorcycle.
[FIG. 4] An explanatory view showing a transition of a clutch control mode of the motorcycle.
[FIG. 5] A cross-sectional view taken along the axial direction of the clutch actuator.
[FIG. 6] A perspective view of a release shaft for operating a clutch device.
[FIG. 7] A cross-sectional view taken along line VII-VII of FIG. 5.
[FIG. 8A] A cross-sectional view corresponding to FIG. 7, showing an action of the release shaft in the half clutch region, and shows the operation when the release shaft is driven by the clutch actuator.
[FIG. 8B] A cross-sectional view corresponding to FIG. 7, showing an action of the release shaft in the half clutch region, and shows the case during manual intervention.
[FIG. 9A] A cross-sectional view corresponding to FIG. 7, showing an action of the release shaft in the standby position, and shows when the release shaft is driven by the clutch actuator.
[FIG. 9B] A cross-sectional view corresponding to FIG. 7, showing an action of the release shaft in the standby position, and shows during the manual intervention.
[FIG. 10] A time chart showing a first example of a time change of a parameter when the vehicle is started at a high gear..
[FIG. 11] A time chart showing a second example of a time change of a parameter when the vehicle is started at a high gear.
[FIG. 12] A graph showing a correlation between a clutch lift load and a clutch control lever angle when the clutch disconnection is performed.
[FIG. 13] A flowchart showing a process when shifting to the forced manual mode.
[FIG. 14] An explanatory diagram showing a basic control state of the clutch control device after the system is started.

### DESCRIPTION OF EMBODIMENTS

Hereinafter, an embodiment of the present invention will be described below with reference to the drawings.

Further, in the following description, the directions such as the front, the rear, the left, and the right are the same as the directions in a vehicle described below unless otherwise specified. In addition, in the drawings used in the following description, an arrow FR indicating the front of the vehicle, an arrow LH indicating the left of the vehicle, and an arrow UP indicating the upper side of the vehicle are shown at appropriate positions. The term "intermediate" used in this embodiment means not only the center between the two ends of the object but also the inner range between the two ends of the object.

### <Entire vehicle>

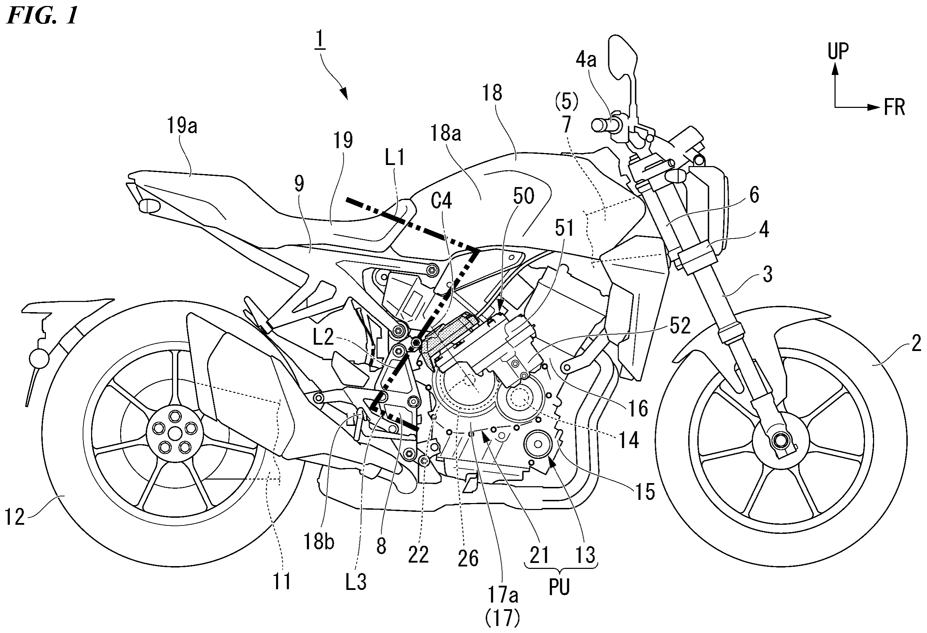

As shown in FIG. 1, the present embodiment is applied to a motorcycle 1 as an example of a saddle-ride type vehicle. The front wheel 2 of the motorcycle 1 is supported by the lower end portions of a pair of left and right front forks 3. The upper portions of the left and right front forks 3 are supported by a head pipe 6 at the front end of the vehicle body frame 5 via a steering stem 4. A bar-type steering handle 4a is attached onto the top bridge of the steering stem 4.

The vehicle body frame 5 includes the head pipe 6, main frames 7 extending downward and rearward from a center of the head pipe 6 in a vehicle width direction (leftward/rightward direction), pivot frames 8 provided below rear end portions of the main frames 7, and a seat frame 9 continuous with rear sides of the main frames 7 and the pivot frames 8. Front end portions of swing arms 11 are swingably axially supported by the pivot frames 8. A rear wheel 12 of the motorcycle 1 is supported by rear end portions of the swing arms 11.

A fuel tank 18 is supported above the left and right main frames 7. A front seat 19 and a rear seat 19a are supported above the seat frame 9 behind the fuel tank 18. Knee grip portions 18a recessed inward in a vehicle width direction are formed on both left and right sides of a rear portion of the fuel tank 18. The left and right knee grip portions 18a are formed to match the following areas. The areas are inner sides around left and right knees of a driver who sits on the front seat 19. Steps 18b are supported on both left and right sides below the front seat 19. The driver places feet in front of the ankles on the steps 18b.

A power unit PU including a prime mover of the motorcycle 1 is suspended below the main frames 7. The power unit PU integrally has an engine (internal combustion engine, prime mover) 13 located in the front thereof, and a gearbox (output object) 21 located in the rear thereof. The engine 13 is, for example, a multi-cylinder engine in which a rotary shaft of a crankshaft 14 is provided in a leftward/rightward direction (vehicle width direction).

The engine 13 has a cylinder 16 standing above a front portion of a crank case 15. A rear portion of the crank case 15 is a gearbox case 17 configured to accommodate the gearbox 21. A right cover 17a crossing a right side portion of the gearbox case 17 is attached to a right side portion of the crank case 15. The right cover 17a is a clutch cover configured to cover a clutch device 26. The power unit PU is linked to the rear wheel 12 via, for example, a chain type transmission mechanism (not shown).

### <Gearbox>

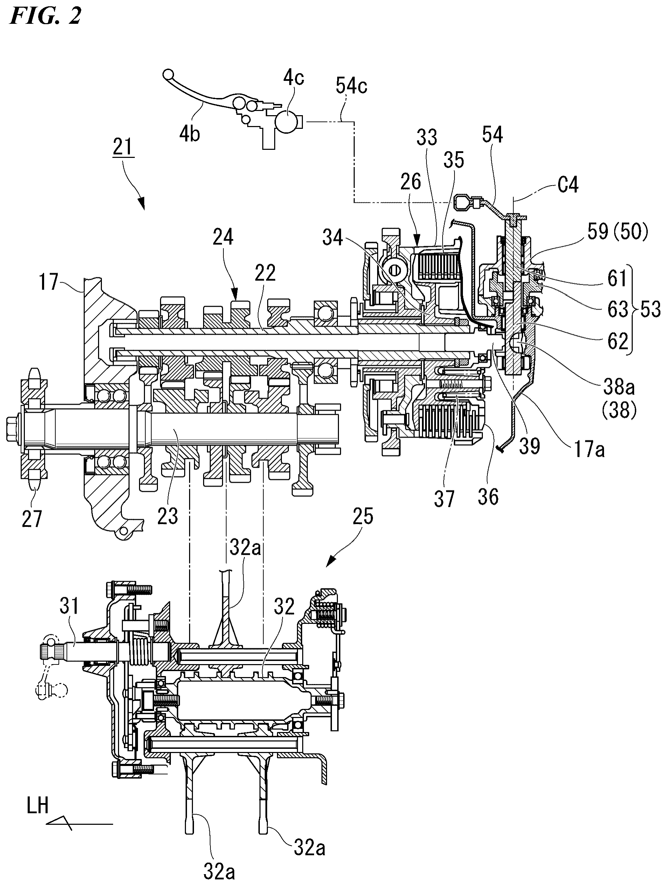

Referring also to FIG. 2, the gearbox 21 is a stepped transmission. The gearbox 21 has a main shaft 22 and a counter shaft 23, and a shifting gear group 24 that bridges between both the shafts 22 and 23. The counter shaft 23 constitutes an output shaft of the gearbox 21 and the power unit PU. A left end portion of the counter shaft 23 protrudes leftward from a rear portion of the gearbox case 17 and is connected to the rear wheel 12 via the chain type transmission mechanism.

The main shaft 22 and the counter shaft 23 of the gearbox 21 are disposed behind the crankshaft 14. The clutch device 26 is disposed coaxially with a right end portion of the main shaft 22. The clutch device 26 connects and disconnects power transmission between the crankshaft 14 of the engine 13 and the main shaft 22 of the gearbox 21. The clutch device 26 performs the connection and disconnection using at least one of an operation of a clutch operating element (for example, a clutch lever 4b) by an occupant or actuation of a clutch actuator 50, which will be described below.

The clutch device 26 is, for example, a wet type multi-plate clutch, a so-called normally closed clutch. Rotary power of the crankshaft 14 is transmitted to the main shaft 22 via the clutch device 26, and transmitted to the counter shaft 23 from the main shaft 22 via an arbitrary gear pair of the shifting gear group 24. A drive sprocket 27 of the chain type transmission mechanism is attached to a left end portion of the counter shaft 23 protruding leftward from a rear portion of the crank case 15.

A change mechanism 25 configured to switch a gear pair of the shifting gear group 24 is accommodated in the gearbox case 17 in the vicinity of the gearbox 21. The change mechanism 25 has a hollow cylindrical shift drum 32 parallel to both the shafts 22 and 23. The change mechanism 25 operates a plurality of shift forks 32a according to rotation of the shift drum 32. This operation is done according to a pattern of a lead groove formed in an outer circumference of the shift drum 32. According to this operation, the change mechanism 25 switches the gear pairs of the shifting gear group 24 used for power transmission between both the shafts 22 and 23.

Here, in the motorcycle 1, only a gear shifting operation (a foot operation of a shift pedal (not shown)) of the gearbox 21 is performed by a driver, and a connecting/disconnecting operation of the clutch device 26 is automatically performed by electric control according to the operation of the shift pedal. That is, the motorcycle 1 employs a so-called semi-automatic gear shift system (automatic clutch type gear shift system).

### <Gear shift system>

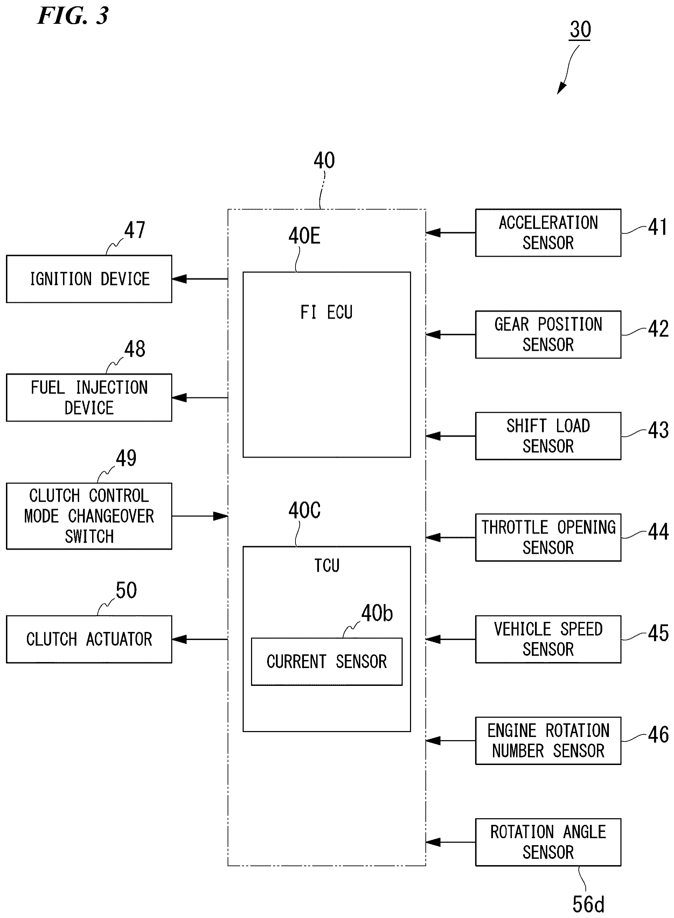

As shown in FIG. 3, a gear shift system 30 includes the clutch actuator 50, a control unit 40, various sensors 41 to 46, and various devices 47, 48 and 50.

The control unit 40 controls operations of the ignition device 47 and the fuel injection device 48, and controls an operation of the clutch actuator 50. This control is performed on the basis of detection information from the acceleration sensor 41, the gear position sensor 42, and the shift load sensor 43 (for example, a torque sensor), various types of vehicle state detection information from the throttle opening sensor 44, the vehicle speed sensor 45 and the engine rotation number sensor 46, and the like.

The acceleration sensor 41 detects a behavior of the vehicle body. The gear position sensor 42 detects a gear shifting stage from a rotation angle of the shift drum 32. The shift load sensor 43 detects an operation torque input to a shift spindle 31 (see FIG. 2) of the change mechanism 25. The throttle opening sensor 44 detects a throttle opening. The vehicle speed sensor 45 detects a vehicle speed. The engine rotation number sensor 46 detects an engine rotation number.

The control unit 40 includes a clutch control unit 40C and an engine control unit 40E which are independent of each other. The clutch control section 40C mainly controls the driving of the clutch actuator 50. The engine control unit 40E mainly controls the driving of the engine 13. The clutch control unit 40C and the engine control unit 40E are configured as, for example, ECU (Electronic Control Unit) that are separate from each other. The clutch control unit 40C and the engine control unit 40E may be integrated in the ECU as long as they perform independent control.

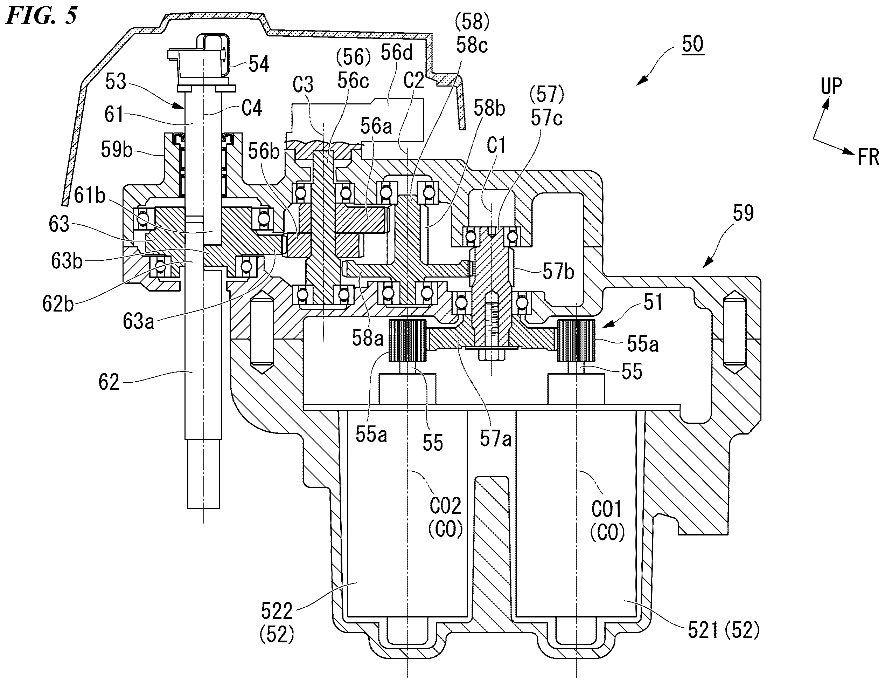

Referring also to FIG. 2 and FIG. 5, the clutch actuator 50 controls a working torque applied to a release shaft 53 in order to connect and disconnect the clutch device 26. The clutch actuator 50 includes an electric motor 52 (electric motor, hereinafter, simply referred to as the motor 52) as a driving source, and a speed reducing mechanism (reduction gear mechanism, transmission mechanism) 51 configured to transmit a driving force of the motor 52 to the release shaft 53. The speed reducing mechanism 51 includes a first reduction shaft 57, a second reduction shaft 58 and a third reduction shaft 56. For example, the third reduction shaft 56 is provided with a rotation angle sensor (rotation motion sensor) 56d for detecting, for example, a rotation angle of the third reduction shaft 56.

Referring to FIG. 3, the clutch controller 40C calculates the following current value on the basis of the previously set calculation program. The current value is a value of current supplied to the motor 52 in order to connect and disconnect the clutch device 26. The current supplied to the motor 52 is obtained from correlation with the torque output to the motor 52. The target torque of the motor 52 is proportional to a working torque (a driven clutch lever torque, which will be described later) given to the release shaft 53. The value of the current supplied to the motor 52 is detected by a current sensor 40b included in the clutch controller 40C. The operation of the clutch actuator 50 is controlled according to a change of the detected value. The clutch actuator 50 will be described below in detail.

### <Clutch device>

As shown in FIG. 2, the clutch device 26 of the embodiment is a multi-plate clutch obtained by stacking a plurality of clutch plates 35 in an axial direction, and a wet type clutch disposed in an oil chamber in the right cover 17a. The clutch device 26 includes an outer clutch 33, a center clutch 34, and the plurality of clutch plates 35.

The outer clutch 33 is driven by normally transmitting rotary power from the crankshaft 14. The center clutch 34 is disposed in the outer clutch 33 and supported by the main shaft 22 integrally rotatably. The plurality of clutch plates 35 are stacked between the outer clutch 33 and the center clutch 34 and frictionally engage them with each other.

A pressure plate 36 having substantially the same diameter as the clutch plates 35 is disposed on a right side of the stacked the clutch plates 35 (an outer side in the vehicle width direction). The pressure plate 36 receives an elastic load of a clutch spring 37 to be biased leftward, and pressure-welds (frictionally engages) the stacked clutch plates 35 with each other. Accordingly, the clutch device 26 is in a connected state in which power transmission is possible. The clutch device 26 is a normally closed clutch that becomes a connected state at normal times when there is no input from the outside.

Release of the pressure welding (frictional engagement) is achieved by an operation of a release mechanism 38 inside the right cover 17a. Actuation of the release mechanism 38 is achieved by at least one of an operation of a clutch lever 4b by an occupant and application of a torque by the clutch actuator 50.

### <Release mechanism>

As shown in FIG. 2, the release mechanism 38 includes a lifter shaft 39, and the release shaft 53.

The lifter shaft 39 is reciprocally held in a right side portion of the main shaft 22 in the axial direction. The release shaft 53 is disposed such that the lifter shaft 39 is perpendicular to the axial direction, and is held on an outer side portion of the right cover 17a to be rotatable around the axis.

Line C4 in the drawings indicates a center axis of the release shaft 53 extending in an upward/downward direction. The release shaft 53 is inclined rearward in the axial direction to be located rearward as it goes upward in a vertical direction when seen in the axial direction of the main shaft 22 (when seen in a side view of the vehicle) (see FIG. 1). The upper portion of the release shaft 53 protrudes outward from the right cover 17a, and a driven clutch lever 54 is integrally rotatably attached to an upper portion of the release shaft 53. The driven clutch lever 54 is connected to the clutch lever 4b via an operation cable 54c.

An eccentric cam portion 38a is provided on a lower portion of the release shaft 53 located inside the right cover 17a. The eccentric cam portion 38a is engaged with a right end portion of the lifter shaft 39. The release shaft 53 is pivoted around the axial center to move the lifter shaft 39 rightward using the action of the eccentric cam portion 38a. The lifter shaft 39 is configured reciprocally integrally with the pressure plate 36 of the clutch device 26. Accordingly, when the lifter shaft 39 is moved rightward, the pressure plate 36 is moved rightward (lifted) against the biasing force of the clutch spring 37. Accordingly, frictional engagement between the stacked clutch plates 35 is released. Accordingly, the normally closed clutch device 26 becomes a disconnected state in which power transmission is impossible.

Further, the release mechanism 38 is not limited to the eccentric cam mechanism and may include a rack and pinion, a feed screw, or the like. The mechanism configured to connect the clutch lever 4b and the driven clutch lever 54 is not limited to the operation cable 54c and may include a rod, a link, or the like. Further, a configuration may be provided in which an oil passage is provided between the clutch lever 4b and the release shaft 53, and the oil pressure generated by the master cylinder on the clutch lever 4b side is transmitted to the slave cylinder on the release shaft 53 side, so that the release shaft 53 is rotated by the operation of the slave cylinder.

### <Clutch control mode>

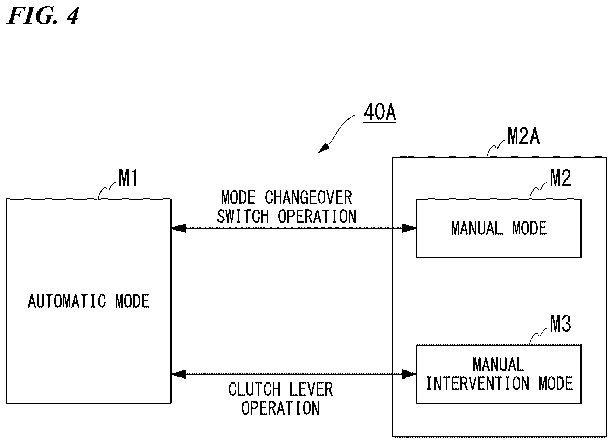

As shown in FIG. 4, a clutch control device 40A of the embodiment has three types of clutch control modes. The clutch control modes have an automatic mode M1 of performing automatic control, a manual mode M2 of performing a manual operation, and a manual intervention mode M3 of performing a temporary manual operation. The clutch control mode is appropriately transitioned between the three types of modes according to operations of a clutch control mode changeover switch 49 (see FIG. 3) and a clutch lever 4b. Further, an object including the manual mode M2 and the manual intervention mode M3 is referred to as a manual system M2A.

The automatic mode M1 is a mode of calculating a clutch capacity appropriate for a traveling state and controlling the clutch device 26 according to automatic departure/gear shifting control. The manual mode M2 is a mode of calculating a clutch capacity and controlling the clutch device 26 according to a clutch operation instruction by an occupant. The manual intervention mode M3 is a mode of receiving a clutch operation instruction from an occupant during the automatic mode M1, calculating a clutch capacity from the clutch operation instruction and controlling the clutch device 26, which is a temporary manual operation mode. Further, during the manual intervention mode M3, for example, when a state in which an occupant stops the operation of the clutch lever 4b (a fully released state) is continued for a prescribed time, it may be set to return to the automatic mode M1.

For example, the clutch control device 40A starts control from the clutch on state (connected state) in the automatic mode M1 when the system starts. In addition, the clutch control device 40A is set to return to the clutch on in the automatic mode M1 when the engine 13 stops (when the system is off). In the normally closed clutch device 26, when the clutch is on, there is no power supply to the motor 52 of the clutch actuator 50. Meanwhile, in the clutch off state (disconnect state) of the clutch device 26, power supply to the motor 52 is maintained.

The automatic mode M1 is based on automatic clutch control. The automatic mode M1 allows the motorcycle 1 to travel without lever operation. In the automatic mode M1, the clutch capacity is controlled based on the throttle opening, the engine rotation number, the vehicle speed, the shift sensor output, and the like. Accordingly, it is possible to start the motorcycle 1 only with throttle operation without engine stall (or engine stop). In addition, the motorcycle 1 can be shifted only by a shift operation. In addition, in the automatic mode M1, when the occupant grips the clutch lever 4b, it switches to the manual intervention mode M3. Accordingly, the clutch device 26 can be arbitrarily disconnected.

Meanwhile, in the manual mode M2, by the lever operation by the occupant, it is possible to control the clutch capacity (that is, to enable connection/disconnection of the clutch device 26). The automatic mode M1 and the manual mode M2 can be switched to each other. This switching is performed, for example, by operating the clutch control mode changeover switch 49 (see FIG. 3) while the motorcycle 1 is stopped and the gearbox 21 is in neutral. Further, the clutch control device 40A may include an indicator that indicates a manual state when transitioning to the manual system M2A (the manual mode M2 or the manual intervention mode M3).

The manual mode M2 is based on manual clutch control. The manual mode M2 can control the clutch capacity according to the operating angle of the clutch lever 4b (and thus the operating angle of the driven clutch lever 54). Accordingly, it is possible to control the connection/disconnection of the clutch device 26 according to the intention of the occupant.

For example, a clutch switch 4c is provided in a lever holder for holding the clutch lever 4b, and the clutch switch 4c is turned on when the clutch lever 4b is in gripped operation (when the clutch is disconnected) and is turned off when the clutch lever 4b is released as non-operation (when the clutch is connected). By turning on and off the clutch switch 4c, the control unit 40 can detect whether or not the driver has operated the clutch.

In the automatic mode M1, the connection/disconnection of the clutch device 26 is automatically performed by the clutch actuator 50. Here, by performing the manual clutch operation on the clutch lever 4b, it is possible to cause the automatic control of the clutch device 26 to temporarily intervene the manual operation (the manual intervention mode M3).

### <Manual clutch operation>

In the motorcycle 1 shown in FIG. 1, a clutch lever 4b as a clutch manual operator is attached to a base end side of a left grip of the steering handle 4a (an inner side in the vehicle width direction).

Referring also to FIG. 2, the clutch lever 4b is connected to the driven clutch lever 54 attached to the release shaft 53 of the clutch device 26 via an operation cable 54c. The driven clutch lever 54 is integrally rotatably attached to the upper end portion of the release shaft 53 protruding from the upper portion of the right cover 17a.

In addition, for example, the clutch control mode changeover switch 49 is provided on a handle switch (not shown) attached to the steering handle 4a. Accordingly, it is possible for the occupant to easily switch the clutch control mode during normal operation.

### <Clutch actuator>

As shown in FIG. 1, the clutch actuator 50 is attached to an upper portion of the right cover 17a of the crank case 15 on the right side.

Referring also to FIG. 5, the clutch actuator 50 includes the motor 52, and the speed reducing mechanism 51.

The motor 52 is, for example, a DC motor, and is disposed such that, for example, the release shaft 53 is parallel to the axial direction. The motor 52 is disposed such that a driving shaft 55 protrudes upward. The speed reducing mechanism 51 transmits a driving force of the motor 52 to the release shaft 53. Hereinafter, the axial direction common to the motor 52 and the release shaft 53 is referred to as an "actuator axial direction".

In the embodiment, a plurality of (two) motors 52 are provided in a single clutch actuator 50. Hereinafter, the motor 52 located in front of the clutch actuator 50 of the vehicle is referred to as a first motor 521, and the motor 52 located behind the first motor 521 of the vehicle and on an inner side in the vehicle width direction is referred to as a second motor 522. Lines C01 and C02 in the drawings indicate center axes (driving axes) of the motors 521 and 522, respectively. For convenience of description, both the motors 521 and 522 may be collectively referred to as the motor 52. In addition, both the axes C01 and C02 may be collectively referred to as an axis C0.

The speed reducing mechanism 51 reduces rotary power output from the motor 52 and transmits it to the release shaft 53. The speed reducing mechanism 51 includes, for example, a gear train in which the release shaft 53 is parallel to the axial direction. The speed reducing mechanism 51 includes driving gears 55a, a first reduction gear 57a, a first small diameter gear 57b, a second reduction gear 58a, a second small diameter gear 58b, a third reduction gear 56a, a third small diameter gear 56b, a driven gear 63a, and a gear case (mechanism case) 59.

The driving gears 55a is provided integrally with the driving shaft 55 of each of the motors 521 and 522. The first reduction gear 57a is meshed with each of the driving gears 55a. The first small diameter gear 57b is provided coaxially with the first reduction gear 57a. The second reduction gear 58a is meshed with first small diameter gear 57b. The second small diameter gear 58b is provided coaxially with the second reduction gear 58a. The third reduction gear 56a is meshed with second small diameter gear 58b. The third small diameter gear 56b is provided coaxially with the third reduction gear 56a. The driven gear 63a is meshed with the second small diameter gear 58b. The gear case 59 accommodates the gears.

The first reduction gear 57a and the first small diameter gear 57b are integrally rotatably supported by a first support shaft 57c. The first reduction gear 57a, the first small diameter gear 57b and the first support shaft 57c constitute the first reduction shaft 57. The second reduction gear 58a and the second small diameter gear 58b are integrally rotatably supported by a second support shaft 58c. The second reduction gear 58a, the second small diameter gear 58b and the second support shaft 58c constitute the second reduction shaft 58.

The third reduction gear 56a and the third small-diameter gear 56b are supported by a third support shaft 56c so as to be rotatable integrally with the third support shaft 56c. The third reduction gear 56a, the third small-diameter gear 56b, and the third support shaft 56c constitute a third reduction shaft 56. The third reduction gear 56a is a fan-shaped gear having a center at the third support shaft 56c. In the figure, a line C1 indicates the center axis of the first reduction shaft 57, a line C2 indicates the center axis of the second reduction shaft 58, and a line C3 indicates the center axis of the third reduction shaft 56.

The driven gear 63a is integrally rotatably provided on the release shaft 53. The driven gear 63a is a fan-shaped gear about the release shaft 53.

A gear of the speed reducing mechanism 51 on a downstream side has a small rotation angle. For example, the third reduction gear 56a and the driven gear 63a can be formed as fan-shaped gears with a small rotation angle.

As a result, the speed reducing mechanism 51 and the clutch actuator 50 can be reduced in size. That is, even when a large-diameter reduction gear is provided in order to increase the reduction ratio, the following effects can be obtained by cutting out portions other than the meshing range of the reduction gear to make it fan-shaped. That is, in particular, it is possible to suppress the speed reducing mechanism 51 from overhanging to the outer side in the vehicle width direction, and it is possible to reduce the weight of the speed reducing mechanism 51.

With such a configuration, the motor 52 and the release shaft 53 can always be interlocked via the speed reducing mechanism 51. Accordingly, a system is configured in which the clutch actuator 50 directly connects or disconnects the clutch device 26.

A rotation angle sensor 56d is provided on the upper surface of the gear case 59. The rotation angle sensor 56d is disposed outside the gear case 59, is connected to one end of the third reduction shaft 56 protruding outside the case, and detects the rotation angle of the third reduction shaft 56. By detecting the rotational angle of the third reduction shaft 56 close to the release shaft 53, the detection accuracy of the rotational angle of the release shaft 53 and thus the clutch capacity is enhanced.

The driving force of the motor 52 is reduced and transmitted to the release shaft 53 as follows. That is, the driving force of the motor 52 is reduced between the driving gears 55a and the first reduction gear 57a, reduced between the first small diameter gear 57b and the second reduction gear 58a, reduced between the second small diameter gear 58b and the third reduction gear 56a, and further, reduced between the third small diameter gear 56b and the driven gear 63a.

### <Disposition of clutch actuator>

As shown in FIG. 1, the clutch actuator 50 is disposed vertically below the knee grip portions 18a on the right side of the fuel tank 18 when seen in a side view of the vehicle. Line L1 in the drawings designates a femoral region of a driver's leg, Line L2 designates a lower leg from the knee, and Line L3 designates a foot from the ankle. As for the leg of the driver, when seen in a side view of the vehicle, the lower leg L2 extends obliquely rearward and downward from the knee grip portion 18a and the foot L3 is placed on the step 18b.

The clutch actuator 50 overhangs outward from the knee grip portions 18a in the vehicle width direction. The clutch actuator 50 is disposed so as to avoid the lower leg L2 of the driver's leg forward when seen in a side view of the vehicle. Accordingly, interference of the clutch actuator 50 with respect to the disposition space of the driver's leg is suppressed. The clutch actuator 50 is disposed so as to avoid the lower leg L2 of the driver's leg forward in the side view of the vehicle even when the driver extends the leg and lands the foot L3. In this respect as well, the interference of the clutch actuator 50 with respect to the disposition space of the driver's leg is suppressed.

### <Release shaft>

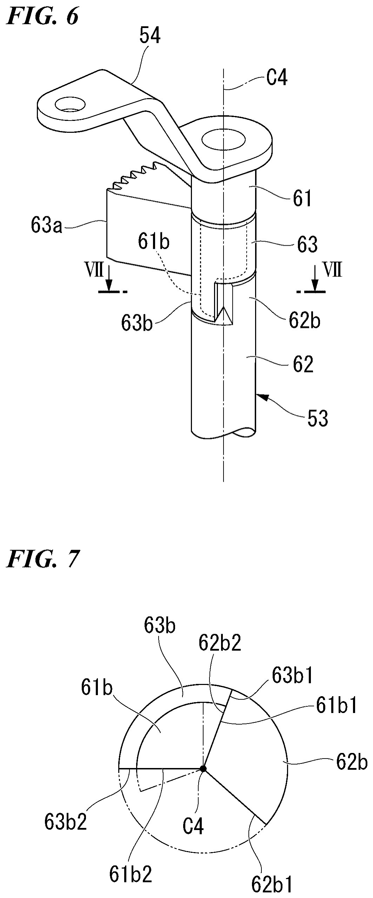

As shown in FIG. 5 and FIG. 6, the release shaft 53 is divided into a plurality of elements in order to be pivotable by individually receiving the input from the clutch actuator 50 and the input by the operation of the occupant.

The release shaft 53 includes an upper release shaft 61 that constitutes an upper portion, a lower release shaft 62 that constitutes a lower portion, and an intermediate release shaft 63. The intermediate release shaft 63 is disposed to bridge between the lower end portion of the upper release shaft 61 and the upper end portion of the lower release shaft 62.

The upper release shaft 61 is formed in a columnar shape. The upper release shaft 61 is rotatably supported by an upper boss portion 59b of the gear case 59. The upper release shaft 61 has an upper end portion protruding outward from the gear case 59. The driven clutch lever 54 is integrally rotatably supported by the upper end portion of the upper release shaft 61. A return spring (not shown) is attached to the driven clutch lever 54. This return spring applies a biasing force in a direction opposite to pivoting by the operation of the clutch lever 4b (pivoting in the clutch disconnecting direction) to the driven clutch lever 54.

The lower release shaft 62 is formed in a columnar shape. The lower release shaft 62 has a lower portion rotatably supported by an inner side of the right cover 17a. The lower portion of the lower release shaft 62 faces the inside of the gear case 59. The eccentric cam portion 38a of the release mechanism 38 is formed in the lower portion (see Fig. 2). A lower return spring (not shown) is attached to the lower end portion of the lower release shaft 62. This lower return spring applies a biasing force in a direction opposite to the pivoting in the clutch disconnecting direction to the lower release shaft 62.

Referring to Fig. 7, a manual operation-side cam 61b formed with a fan-shaped cross-section and extending in the axial direction is provided on a lower end portion of the upper release shaft 61.

A clutch-side cam 62b formed with a fan-shaped cross section and extending in the axial direction is provided on an upper end portion of the lower release shaft 62. The clutch-side cam 62b is provided within a range that avoids the manual operation-side cam 61b in the circumferential direction.

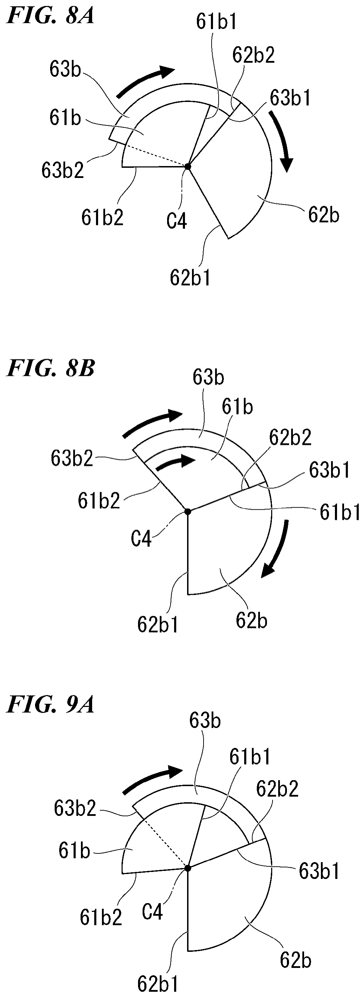

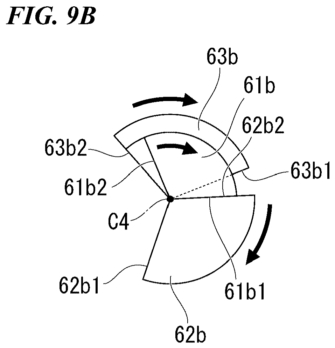

The lower end portion (the manual operation-side cam 61b) of the upper release shaft 61 and the upper end portion (the clutch-side cam 62b) of the lower release shaft 62 overlap each other in the axial direction while avoiding each other in the circumferential direction. Accordingly, it is possible to press one side surface 61b1 of the manual operation-side cam 61b in the circumferential direction against the other side surface 62b2 of the clutch-side cam 62b in the circumferential direction and rotate the lower release shaft 62 (see FIG. 8B and FIG. 9B).

The other side surface 61b2 of the manual operation-side cam 61b in the circumferential direction and one side surface 62b1 of the clutch-side cam 62b in the circumferential direction are separated from each other in the circumferential direction. Accordingly, when the clutch-side cam 62b has an input from the clutch actuator 50, the lower release shaft 62 can be rotated independently from the upper release shaft 61 (see FIG. 8A and FIG. 9A).

For example, the intermediate release shaft 63 is formed in a cylindrical shape. The intermediate release shaft 63 can be inserted through an engaging portion (upper and lower shaft engaging portions) between the lower end portion of the upper release shaft 61 and the upper end portion of the lower release shaft 62. The driven gear 63a is integrally rotatably supported by the intermediate release shaft 63.

A control operation-side cam 63b formed with a fan-shaped cross section and extending in the axial direction is provided on the intermediate release shaft 63.

The control operation-side cam 63b of the intermediate release shaft 63 and the clutch-side cam 62b of the lower release shaft 62 overlap each other in the axial direction while avoiding each other in the circumferential direction. Accordingly, it is possible to press one side surface 63b1 of the control operation-side cam 63b in the circumferential direction against the other side surface 62b2 of the clutch-side cam 62b in the circumferential direction and rotate the lower release shaft 62.

The control operation-side cam 63b is disposed to avoid the manual operation-side cam 61b of the upper release shaft 61 in the radial direction. Accordingly, when the input from the clutch actuator 50 is transmitted to the clutch-side cam 62b, the lower release shaft 62 can be rotated independently from the upper release shaft 61. In addition, when the manual operation is performed, the upper release shaft 61 can be rotated independently from the intermediate release shaft 63 on the control side.

The other side surface 63b2 of the control operation-side cam 63b in the circumferential direction and the one side surface 62b 1 of the clutch-side cam 62b in the circumferential direction are separated from each other in the circumferential direction. Accordingly, when the clutch-side cam 62b has an input from a manual operation-side cam 63b, the lower release shaft 62 can be rotated independently from the intermediate release shaft 63.

Referring to FIG. 5, the clutch actuator 50 pivotably holds the upper release shaft 61 and the intermediate release shaft 63 with the gear case 59. The clutch actuator 50 includes the upper release shaft 61 and the intermediate release shaft 63. The lower release shaft 62 is rotatably held by the right cover 17a. The upper end of the lower release shaft 62 protrudes to the outside of the cover at the right cover 17a of the actuator mounting portion and is inserted into the gear case 59.

In such a configuration, when the clutch actuator 50 is attached to the right cover 17a, the linear release shaft 53 is configured together with the lower release shaft 62 located at the side closer to the right cover 17a. The release shaft 53 is configured by connecting the upper release shaft 61, the intermediate release shaft 63 and the lower release shaft 62 to each other.

The power unit PU of the embodiment can be configured as follows for a manual clutch type power unit that performs the connecting/disconnecting operation of the clutch device 26 by the operation of the driver without electric control. That is, the power unit PU can be configured by replacing the right cover 17a and the release shaft 53 and retrofitting the clutch actuator 50. For this reason, the clutch actuator 50 can also be attached to power units of different models. For this reason, a semi-automatic gear shift system (automatic clutch type gear shift system) can be easily configured by sharing the clutch actuator 50 among many models.

### <Two Motor Control>

Referring to FIG. 5, in the embodiment, two motors 521,522 in the clutch actuator 50 may cooperate to drive the release shaft 53 (to connect and disconnect the clutch device 26). In this case, the load shared by the two motors 521,522 is halved, so that the size of each motor 521,522 can be reduced. This increases the degree of freedom in the layout of the motor 52 as compared with the case where a single motor 52 is provided in a large size. Therefore, even when the clutch actuator 50 is disposed on the outer side of the power unit PU, the clutch actuator 50 is easily prevented from being extended outward in the vehicle width direction. Therefore, the clutch control device 40A can be substantially miniaturized.

In the embodiment, in the clutch actuator 50, one of the plurality (two) motors 52 may be used as a drive source of the release shaft 53 in a normal time (non-fail time), and the remaining one may be used for another purpose. For example, the action of the remaining motor 52 may be saved for fail-safe purposes or may be used as a current sensor.

### <Basic Control State of Clutch Control Device>

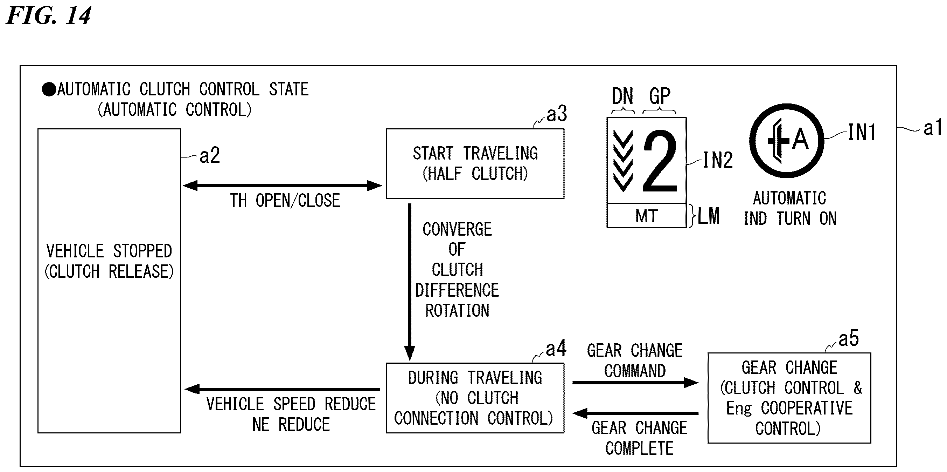

FIG. 14 shows the basic control state of the clutch control device 40A after the system is started. For example, when the ignition is turned on (main switch is turned on, system operating) from the time when the gearbox 21 is in the neutral state, the clutch control device 40A is in the clutch automatic control state (automatic mode M1) (see a1 in the figure). At this time, the clutch actuator 50 is driven to release (disconnect) the clutch device 26 (see a2 in the figure). When the gearbox 21 is shifted into the in-gear state and the throttle is opened from this state, the starting control of the motorcycle 1 including the half clutch control is performed (see a3 in the figure).

At this time, the clutch control device 40A increases the vehicle speed while operating the clutch device 26 to the engagement side (connection side) so that the rotation difference (clutch difference rotation) between the upstream side and the downstream side of the clutch device 26 converges to zero while the clutch switch 4c is kept off (no operation of the clutch lever 4b). The control in which the clutch device 26 is controlled to be released (disconnected) when the motorcycle 1 is stopped is performed regardless of whether the gearbox 21 is in the neutral or in gear state.

When the automatic clutch control (automatic mode M1) is executed, the first indicator IN1 in the meter device of the motorcycle 1 is turned on to notify the driver that the automatic clutch control is being executed. When a downshift request described below is made, the driver is notified of the downshift request by using the second indicator IN2 in the meter device.

The second indicator IN2 has a configuration in which a gear position indicator GP is provided with a downshift indicator DN and a mode limit indicator LM, and the background color can be changed. For example, when the vehicle is stopped with the shift device 21 in the high gear, the shift down indicator DN is turned on and the background color is set to warning color in order to alert the driver. When the motorcycle 1 starts moving with the shift gear 21 in the high gear position, the warning color flashes to alert the driver stronger. When the mode is shifted to the forced manual mode, which will be described later, the mode limit indicator LM is turned on to notify the driver of such shift. The second indicator IN2 may be activated not only when the vehicle is stopped and started but also when the vehicle is moving. For example, when the gear stage (gear position) of the transmission 21 is excessively close to the high speed with respect to the current vehicle speed, the second indicator IN2 may light or blink the shift down indicator DN to prompt the driver to perform the gear shifting operation.

During the travel in the clutch engaged state (clutch differential rotation 0), the clutch automatic control is interrupted and the drive of the clutch actuator 50 is stopped (see a4 in the figure). When the clutch control device 40A is in the automatic clutch control (automatic mode M1), the first indicator IN1 is turned on regardless of whether the clutch actuator 50 is driven, so that the driver can recognize that the clutch control device 40A is in the automatic clutch control (automatic mode M1).

In the clutch automatic control, the gear change of the gearbox 21 can be performed only by the driver operating the shift operator (see a5 in the figure). At this time, the clutch control and the engine cooperative control are executed with the shift operation as the gear change command. After the gear change is completed, the automatic clutch control is returned to the interrupted state.

### < Correspondence to high-gear starts>

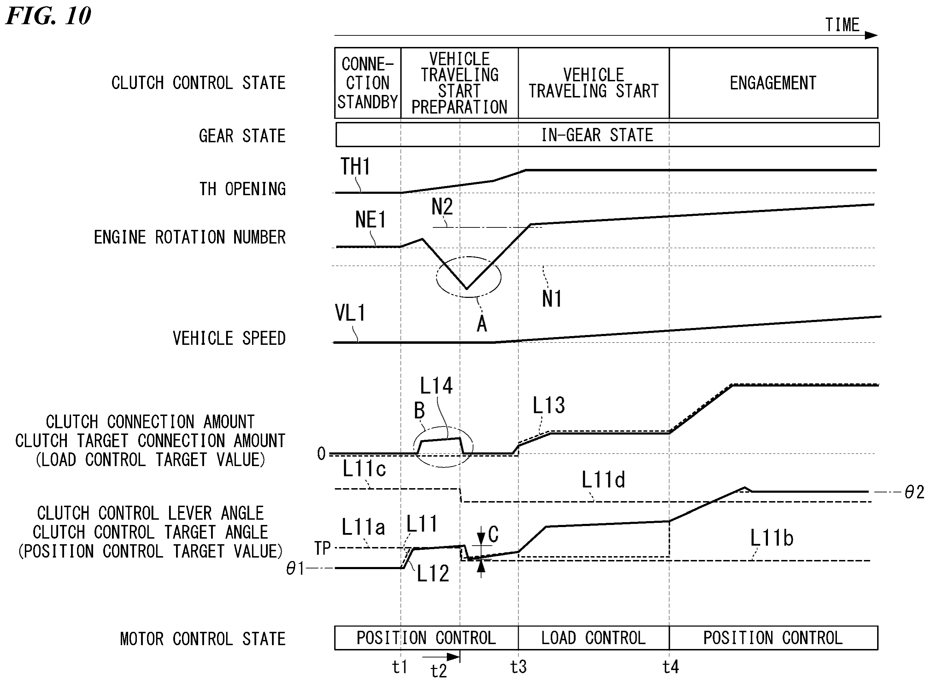

Next, the correspondence to the high-gear start (start at the second gear or higher) in the auto mode M1 in the embodiment will be described with reference to FIGS. 10 to 13.

If the high-gear start in the auto mode M1 is continuously performed, it is conceivable that the clutch plate 35 is abnormally worn (deteriorated) due to the excessive use of the half clutch. In order to suppress abnormal wear of the clutch plate 35 due to high-gear start, in the embodiment, a shift down indicator DN is provided in the meter device, and when the shift gear is high with respect to the vehicle speed, the driver can be notified by lighting and the like of the shift down indicator DN.

The determination of whether the shift gear is high with respect to the vehicle speed corresponds to, for example, when the gear position of the transmission 21 is the second gear or higher, the determination of whether the current vehicle speed is lower than the lower limit value of the speed range preset for each gear position. Hereinafter, the high-gear start is a start in which the gear position of the transmission 21 is the second gear or higher.

In addition to the notification to the driver, as a further correspondence to the high-gear start, for example, the control unit 40 has a dedicated map of the high-gear start, and performs a control for reducing the start-time rotation speed Ne at the high-gear start (particularly in the high throttle opening degree region). The starting rotational speed Ne is a lower limit value of the engine rotational speed maintained during the half clutch control. In the half clutch control at the time of starting the vehicle, the half clutch control is continued so that the engine speed is maintained at or above the starting speed Ne. The starting rotation speed Ne at the time of starting at a high gear is set to a lower value than the starting rotation speed Ne at the time when the transmission 21 is in a low-speed gear (first gear). This enables the vehicle to start at a high gear, and reduces the clutch load by reducing the half clutch speed at the time of starting at a high gear.

As an additional measure for the case where the high-gear start is repeated even if the driver is notified, in the embodiment, it can be controlled such that the clutch control mode is forcibly locked to the manual mode M2 so that the high-gear start can be performed. In other words, the mode can be shifted to the forced manual mode in which only the manual mode M2 can be selected and the auto mode M1 cannot be selected.

Although it is difficult to directly measure the degree of wear of the clutch plate 35, the wear state of the clutch plate 35 can be estimated from changes in various parameters shown in FIGS. 10 to 12, and therefore, when it is recognized that abnormal wear has occurred based on such estimation results, the operation mode is shifted to the forced manual mode.

When the set condition relating to the clutch wear is satisfied, the control unit 40 shifts to the forced manual mode. The control unit 40 stops the auto mode M1, which enables high-gear starting before excessive abnormal wear of the clutch plate 35 progresses, and enables only the manual mode M2, which starts the vehicle by manual operation, so that an increase in clutch load due to further high-gear starting can be suppressed.

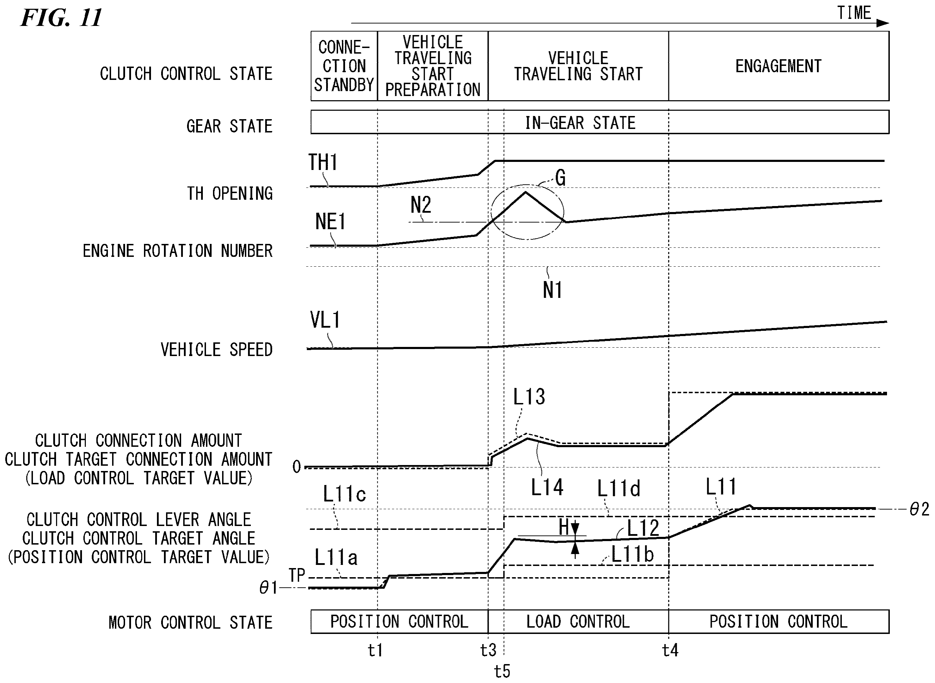

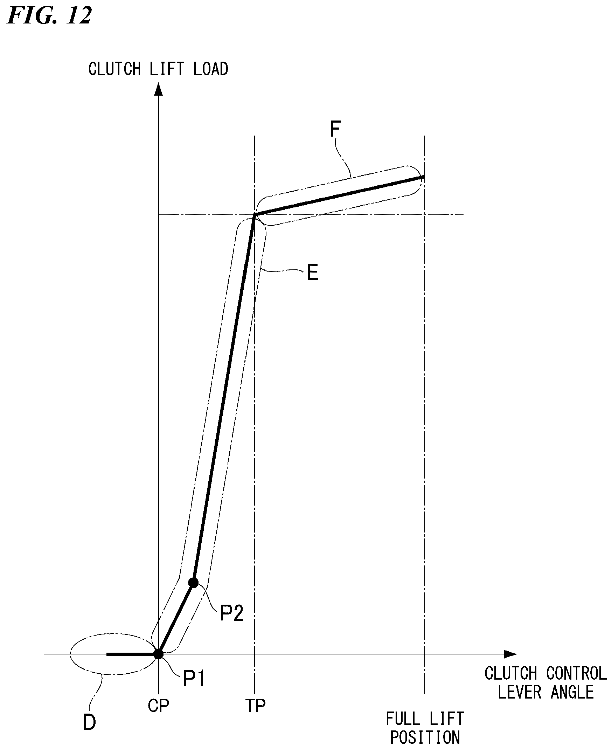

As a precondition for shifting to the forced manual mode, the control unit 40 always learns the touch point (connection start position) TP of the clutch device 26 at the time of starting the vehicle (see FIGS. 10 and 11). Further, the control unit 40 always learns the clutch disconnection start position CP when the ignition is turned off (see FIG. 12).

The clutch connection start position TP and the clutch disconnection start position CP are additionally learned each time the vehicle is started and each time the key is turned off, so that the amount of wear of the clutch device 26 can be grasped (predicted). The learning of the clutch connection start position TP and the clutch disconnection start position CP will be described later.

When the amount of clutch wear exceeds the specified amount, the high-gear start in at least the auto mode M1 is disabled (forced manual mode), so that the clutch device 26 can be manually operated to travel while further clutch wear due to the high-gear start can be suppressed. Further, by switching to the forced manual mode even in the event of a system failure, it is possible to continue the running in the manual mode M2.

Since the wear of the clutch plate 35 is accelerated when the high-gear start is repeated, the amount of the disc wear is monitored (constant learning of TP at the vehicle start, and learning of disconnection start position when the key is turned off). The vehicle is allowed to run in the manual mode M2 even during the failure mode (during the forced manual mode). The clutch wear amount is monitored from the TP constant learning value, and it is shifted to the forced manual mode when the threshold value is exceeded.

### <Processing up to Forced Manual Mode Shift>

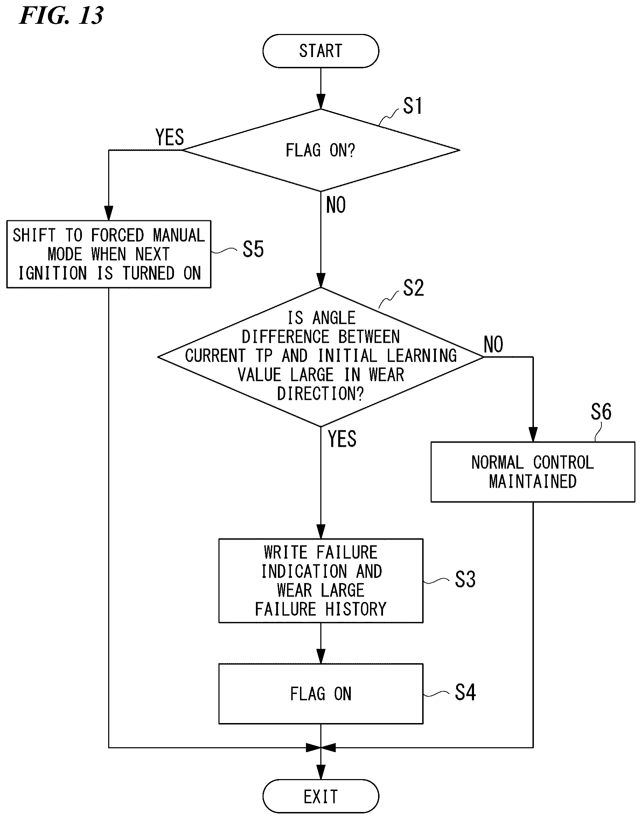

Referring to the flowchart of FIG. 13, the process of the control unit 40 up to the shift to the forced manual mode will be described.

First, when the process is started with the ignition ON, it is determined in step S1 whether or not the fail flag, which will be described later, is ON. If NO (flag OFF) in step S1, the process proceeds to step S2. If YES (flag ON) in step S1, the process proceeds to step S5 described later.

In step S2, it is determined whether or not the angle difference between the current touch point TP and the initial learning value of the touch point is large in the wear direction. The current touch point TP is a touch point that is updated at any time during use of the motorcycle 1 by the constant learning described above. The initial learning value of the touch point is a touch point acquired by learning (inspection) performed at the time of factory shipment or clutch replacement.

If YES (large in the wear direction) in step S2, it is determined that the clutch wear is large, and the process proceeds to step S3. If NO (small in the wear direction) in step S2, it is determined that the clutch wear is small or swollen, and the process is temporarily terminated with the normal control being maintained (step S6).

In step S3, a failure indication (e.g., turning off of the automatic control indicator) is performed on the meter device, the wear large failure history is written in the memory, and then in step S4, a flag (failure flag) effective for the next ignition on is turned on, and the process is once ended.

When the process is started at the next ignition ON, if YES (flag ON) in step S1, the process proceeds to step S5. In step S5, the operation mode is shifted to the forced manual mode. Thus, the shift to the auto mode M1 is stopped and only the manual mode M2 can be selected, and the clutch wear due to the increase in the clutch load due to the further high-gear start is suppressed.

Referring to FIG. 14, the clutch control device 40A notifies the driver of the auto mode M1 by means of the dedicated first indicator IN1 from the viewpoint of showing the driver of the specification difference between the manual mode M2 and the auto mode M1. Therefore, when the driver performs the in-gear operation from the neutral position when the ignition is turned on, the driver can easily visually confirm that the auto mode M1 is valid, and can perform the in-gear operation without operating the clutch lever 4b with ease.

On the other hand, when the transmission 21 is in the high gear and the vehicle is coast traveling while the throttle is closed or the vehicle is stopped, a background color of the second indicator IN2 is set to a color such as amber to alert the driver. That is, the driver is notified that the vehicle may start in a high gear. When the vehicle is started in a high gear (high gear start), the second indicator IN2 performs flashing while the background color is kept at warning color, thereby strongly calling the driver's attention.

In the TP constant learning, the touch point (clutch connection start position) TP of the clutch device 26 is learned by a drop or a rise in the engine speed at the time of starting the vehicle in the auto mode M1. The clutch disconnection start position CP is learned when the ignition is turned off.

The purpose of the TP constant learning at the time of starting the vehicle is to eliminate a deviation between the clutch connection start position (target value) recognized by the control unit 40 and the actual clutch connection start position (actual measurement value). If the above-described target value and the actual measurement value are deviated from each other due to wear or swelling of the clutch, the clutch may be connected too early to cause engine stall, or the clutch may be connected too late to increase the engine speed. In the embodiment, the clutch connection start position is corrected when the vehicle is started in the auto mode M1, thereby avoiding the possibility of engine stall or engine 13 blowing up.

FIGS. 10 and 11 are time charts showing time changes of parameters when the start control is performed in the auto mode M1. The transition of the clutch control state, the gear state of the transmission 21, the throttle opening (line TH1), the engine speed (line NE1), the vehicle speed (line VL1), the target value and the actual measurement value of the clutch engagement amount (lines L13 and L14), the target value and the actual measurement value of the clutch control lever angle (clutch operating angle) (lines L11 and L12), and the transition of the motor control state are shown in order from the upper part of the figures.

The target value of the clutch connection amount is a target value for load control of the motor 52, and the target value of the clutch control lever angle is a target value for position control of the motor 52. The clutch control lever angle is a rotation angle of the intermediate release shaft 63 that rotates by the drive of the motor 52. In the embodiment, the clutch control lever angle is calculated by multiplying the rotational angle of the third reduction shaft 56 to which the rotational angle sensor 56d is attached by the gear ratio between the gears 56b and 63a.

In the connection standby state (range from the left end to timing t1 in the figure) during the start control in the auto mode M1, the transmission 21 is in the in-gear state, the motor control state is the position control, and the clutch device 26 is in the disconnected state (the clutch connection amount is 0, and the clutch control lever angle is the disconnected angle θ1). At this time, the relearning of the clutch connection start position at the time of vehicle starting is permitted when the following conditions are satisfied: the engine is in the idle NE state after the warm-up, the difference between the idle NE and the current NE is equal to or less than a predetermined value, and the engine is in the stopped state (vehicle speed is 0 and the throttle is closed).

In the relearning of the clutch connection start position at the time of vehicle starting, first, the clutch connection standby state at the time of vehicle starting control in the auto mode M1 is shifted to the vehicle starting preparation control. At this time, the throttle motor is driven to slightly open the throttle, and the clutch control lever angle is changed to the vicinity of the clutch connection start position L11a (touch point TP) according to the throttle opening degree by the position control of the motor (timing t1). The initial target value of the clutch engagement amount at the clutch connection start position L11a is 0. Thereafter, the deviation of the clutch connection start position L11a is learned in accordance with the state of the drop or rise of the engine speed after the lapse of the predetermined time, and the control target value is corrected.

In the example of FIG. 10, the drop in the engine speed is detected after a lapse of a specified time t2 by timer setting from the timing t1 (part A in the figure). At this time, when the engine speed drops to the first threshold value N1 or less, it is recognized that the clutch connection is getting early due to the swelling of the clutch plate 35 or the like. At this time, the clutch connection amount is unintentionally increased with respect to the initial target value 0 (part B in the figure).

Therefore, the clutch control lever angle is returned to the clutch disconnection side so as to return the engine speed to the vicinity of the target value N2 to avoid the possibility of engine stall, and the clutch connection start position L11a and the clutch disconnection start position L11c are offset in the clutch disconnection direction based on the amount of return C of the clutch control lever angle. In the figure, lines L11a and L11c indicate the initial clutch connection start position and clutch disconnection start position of the clutch control lever angle, respectively. In the figure, lines L11b and L11d indicate the clutch connection start position and the clutch disconnection start position after correction (after relearning) of the clutch control lever angle, respectively.

When the conditions for starting clutch connection are satisfied (timing t3), that is, when the throttle opening degree and the engine speed satisfy the start control permission conditions (threshold value or more), the process shifts from the start preparation control to the vehicle start control. The vehicle start control includes a half clutch control, and converges differential rotation of the clutch device 26 (differential clutch rotation) toward zero while accelerating the motorcycle 1. In the vehicle start control, the motor control state becomes the load control, the target value of the clutch connection amount becomes valid, and the target value of the clutch control lever angle becomes invalid. When the clutch differential rotation is converged in the start control (timing t4), the motor control state is switched to the position control, and the clutch actuator 50 is driven until the clutch control lever angle becomes the clutch connection angle θ2.

Here, the correlation between the clutch control lever angle and the stroke amount of the clutch device 26, and thus the clutch lift load, will be described with reference to FIG. 12.

As shown in FIG. 12, the clutch lift load is divided into a stroke region (play region) D, a torque control region (half clutch region) E, and a clutch disconnection region F according to the lever rotation angle.

The stroke region D is a region where the clutch device 26 is in operation (during stroke) for invalid killing. The invalid killing is killing the gap until the clutch device 26 reaches the clutch disconnection start position CP.

The torque control region E is a region in which a control of the transmission load (clutch capacity) is performed after the clutch device 26 has reached the clutch disconnection start position CP.

The clutch disconnection region F is a region where the clutch capacity becomes zero and the clutch device 26 becomes a disconnected state.

FIG. 11 is a time chart similar to FIG. 10, but in the example of FIG. 11, although there is no drop in NE after the lapse of the specified time, a rise in the engine speed is detected during the vehicle start control.

At timing t3 when the conditions for starting clutch connection are satisfied, the throttle opening degree and the engine speed satisfy the vehicle start control permission conditions (equal to or greater than the threshold value), and it is shifted from the vehicle start preparation control to the vehicle start control. In the vehicle start control, the motor control state becomes the load control. In the example of FIG. 11, the engine speed rising (the engine speed is equal to or higher than the second threshold value N2) is detected after a lapse of a predetermined time t5 by timer setting from the timing t3 (part G in the figure). From this rise, it is recognized that the clutch connection is delayed due to the wear of the clutch plate 35.

Therefore, the clutch control lever angle (and the clutch engagement amount) is increased toward the clutch connection side in order to stop the engine speed from raising, as compared with the case where there is no raise in the engine speed. Based on the increase amount H of the clutch control lever angle at this time, the clutch connection start position L11a and the clutch disconnection start position L11c are offset in the clutch connection direction. In the figure, lines L11b and L11d indicate the clutch connection start position and the clutch disconnection start position after correction (after relearning) of the clutch control lever angle according to the second embodiment, respectively.

When the clutch differential rotation is converged in the vehicle start control (timing t4), the motor control state is switched to the position control, and the clutch actuator 50 is driven until the clutch control lever angle becomes the clutch connection angle θ2.

When the motorcycle 1 is restarted after the motorcycle 1 has been in a stopped state and the motorcycle 1 is started with a high gear position of, for example, second gear or higher (high gear start) because the driver has forgot to perform a shift operation, where the motorcycle 1 should be started with a first gear position, the following shift control is executed.

For example, when the motorcycle 1 is started while the gear position of the transmission 21 being at the second gear or higher and the vehicle speed is less than a predetermined set value, the control unit 40 shifts to clutch capacity control in which the clutch capacity is made higher than that in normal clutch control.

In the clutch capacity control, the control unit 40 sets a target value of the drive amount (clutch connection amount) of the clutch actuator 50 to a second target value higher than a first target value when the gear position of the transmission 21 is the first gear.

Although the clutch actuator 50 is driven to start the connection of the clutch device 26, the clutch capacity is set to be higher than the half-clutch state at the time of normal vehicle start with the gear position at the first gear.

Therefore, in the high-gear start, the clutch device 26 is engaged in a state where the difference between the rotational speed of the engine 13 and the rotational speed of the engine converted from the rotational speed of the counter shaft 23 is small, so that a large load is prevented from being applied to the clutch device 26. On the other hand, the method of the present embodiment is not limited to the method of the present embodiment, and the control unit 40 may control the operation of the ignition device 47 and the fuel injection device 48 so that the engine 13 is not over-rotated by the slip of the clutch device 26 due to the clutch displacement control when the vehicle is started in a high-gear, and the engine speed may be made not to exceed a predetermined upper limit speed.

FIG. 12 shows that the clutch disconnection start position CP is learned when the ignition is turned off.

As shown in FIG. 12, when the ignition is turned off, the motor 52 is driven to operate the clutch device 26 to the disconnection side. At this time, the rise of the current value supplied to the motor 52 is detected by the current sensor 40b, and the clutch control lever angle P2 at the time when the motor supply current has rose is detected. When the lever angle P2 is deviated from the clutch control lever angle P1 previously learned and stored in the memory, the clutch control lever angle is corrected by using the lever angle P2 as a new control target value.

As described above, the clutch control device 40A of the present embodiment is provided with a clutch device 26 that is configured to disconnect and connect power transmission between the engine 13 and the transmission 21 of the motorcycle 1, a clutch actuator 50 that is configured to operate the clutch device 26, and a control unit 40 that is configured to control the drive of the clutch actuator 50, wherein the control unit 40 has an automatic control mode M1 that automatically operates the clutch device 26 by driving the clutch actuator 50 and a manual control mode M2 that manually operates the clutch device 26 by operation input to a clutch lever 4b operated by a driver, and the control unit 40 shifts to a forced manual control mode, which can select only the manual control mode M2, when a set condition relating to wear of the clutch device 26 is satisfied.

According to this configuration, when clutch wear is considered, by selecting only the manual control mode M2 in which high-gear starting by automatic control cannot be performed, it is possible to suppress the continuation of clutch wear due to the repetition of high-gear starting while maintaining the state in which the motorcycle 1 can travel. As a result, the durability of the clutch device 26 can be improved.

In the clutch control device 40A of the present embodiment, the clutch device 26 transmits power by frictional engagement of the clutch plate 35, and the control unit 40 determines that the set condition relating to wear of the clutch device 26 is satisfied when the amount of wear of the clutch plate 35 is equal to or greater than a threshold value.

According to this configuration, when the amount of wear of the clutch plate 35 becomes equal to or greater than the threshold value, it is determined that the set condition relating to the wear of the clutch device 26 is satisfied, and the operation mode is shifted to the forced manual control mode, whereby the clutch control mode can be accurately limited based on direct information relating to the clutch wear.

The clutch control device 40A of the present embodiment is provided with an angle sensor 56d configured to detect the rotation angle of the transmission element (third reduction gear 56) of the clutch actuator 50, and the control unit 40 determines that the set condition relating to the wear of the clutch device 26 is satisfied when the value detected by the angle sensor 56d increases by a predetermined amount or more from the initial value at a time when a touch point TP, at which the clutch device 26 starts connecting, has reached during a connection of the clutch device 26.

According to this configuration, when the rotation angle of the transmission element of the clutch actuator 50 increases by a predetermined amount or more in the half clutch region after the touch point TP, it is determined that the set condition relating to the wear of the clutch device 26 is satisfied, and the clutch device is shifted to the forced manual control mode, whereby the clutch control mode can be accurately and conveniently limited by using the angle sensor 56d that can also be used for drive control of the clutch actuator 50.

In the clutch control device 40A of the present embodiment, when the control unit 40 determines that the set condition relating to the wear of the clutch device 26 is satisfied, the control unit 40 shifts to the forced manual control mode from the next driving cycle via the ON / OFF of the main switch of the motorcycle 1.

According to this configuration, even when the setting condition relating to the wear of the clutch device 26 is satisfied and the clutch control mode is limited, the clutch control mode is not limited during the current driving cycle, so that the driver can be notified of the shift to the forced manual control mode when the main switch is turned ON / OFF, and the driver can easily accept the limitation of the clutch control mode.

In the clutch control device 40A of the present embodiment, when the motorcycle 1 decelerates, and when a gear shift position of the transmission 21 of the vehicle 1 is on the high speed side with respect to the vehicle speed, a notification is made to the driver that the gear shift position is on the high speed side.

According to this configuration, when the motorcycle 1 is decelerated and the shift position of the transmission 21 is high with respect to the vehicle speed, the driver is notified, thereby urging the driver to shift down and increasing the certainty that the shift position is returned to the low gear position, especially before the motorcycle 1 stops. This reduces the frequency of starting the vehicle at the high-gear shift position, and reduces the load on the clutch device 26.

In the clutch control device 40A of the present embodiment, when the motorcycle 1 starts traveling while the gear shift position remains on the high-speed side, a notification is made to a driver that the transmission 21 has the gear shift position on the high-speed side.

According to this configuration, the driver is notified that the gear shift position is on the high speed side when the vehicle starts, so that the frequency of starting while the gear shift position is on the high speed side can be further reduced, and the load on the clutch device 26 can be further reduced.

In the clutch control device 40A of the present embodiment, when the motorcycle 1 starts traveling, the control unit 40 performs a half clutch control so that the engine rotation number becomes equal to or higher than a vehicle starting rotation number Ne, and the control unit 40 reduces the vehicle starting rotation number Ne when the motorcycle 1 starts traveling while the gear shift position is kept on the high speed side, compared with the case where the motorcycle 1 starts traveling when the gear shift position is on the low speed side.

According to this configuration, when the gear shift position of the transmission 21 is on the high-gear side, the vehicle starting rotation number Ne is reduced as compared with when the gear shift position of the transmission 21 is on the low speed side, thus it is possible to suppress the clutch load due to the half clutch at the time of travel starting at the gear shift position on the high speed side.

**In** the clutch control device 40A of the present embodiment, a notification is made to a driver that the forced manual control mode is in effect while shifting to the forced manual control mode.

According to this configuration, by notifying the driver that the clutch control mode is the forced manual control mode, it is possible to suppress erroneous operations such as the driver misidentifying the clutch control mode as the automatic control mode and performing the in-gear operation without performing the clutch operation.

The present invention is not limited to the above embodiment, and for example, the clutch operating element is not limited to the clutch lever 4b, and may be a clutch pedal or other various operating elements. The clutch device 26 may be a normally open clutch which is in a disconnected state in a normal state in which there is no input from the outside. The clutch device 26 is not limited to the clutch device arranged between the engine 13 and the gearbox 21, and may be arranged between the prime mover and any output object other than the gearbox. The prime mover is not limited to the internal combustion engine, and may be an electric motor.

The present invention is not limited to the application to a saddle-riding type vehicle in which the clutch operation is automated as in the above embodiment. For example, the present invention can be applied to a saddle-ride type vehicle (a saddle-ride type vehicle having a gearbox device without a clutch operation) which basically performs a manual clutch operation but does not perform the manual clutch operation under a predetermined condition and can shift the speed by adjusting the driving force.

The clutch control device 40A of the present embodiment may be applied to a saddle-ride type vehicle other than a motorcycle.

The saddle-ride type vehicle includes all vehicles in which a driver rides a vehicle while stepping over the vehicle body, and includes not only motorcycles (including motorized bicycles and scooter type vehicles) but also three wheeled vehicles (including front and rear two wheeled vehicles as well as front and rear two wheeled vehicles) or four wheeled vehicles (such as four wheeled buggies).

The invention may be applied to a vehicle including an electric motor as a prime mover.

The invention may be applied to vehicles other than saddle-ride type vehicles (passenger cars, buses, trucks, etc.).

Although the clutch control device 40A of the present embodiment is applied to a vehicle, the present invention is not limited to the application to a vehicle, and may be applied to various transportation equipment such as an aircraft and a ship, and various vehicles and moving bodies such as construction machines and industrial machines. Furthermore, the present invention is widely applicable to a hand-pushed lawn mower, a cleaning machine, and the like, as long as the clutch control device is provided in an apparatus other than a vehicle.

The configuration of the above embodiment is an example of the present invention, and various changes can be made without departing from the scope of the present invention, such as replacing the components of the embodiment with well-known components.

### REFERENCE SIGNS LIST

1 Motorcycle (vehicle)
4b Clutch lever (clutch operating element)
13 Engine (internal combustion engines, prime mover)
21 Gearbox (output object)
26 Clutch device
35 Clutch plate
40 Control unit
40A Clutch control device
50 Clutch actuator
56 Third reduction shaft (transmission element)
56d Rotation angle sensor (angle sensor)
M1 Auto Control Mode, Automatic mode
M2 Manual Control Mode, Manual Mode
M3 Manual Control Intervention Mode, Manual Intervention Mode
Ne Start-time rotation speed
TP Touch point

## Claims

1. A clutch control device (40A), comprising;
a clutch device (26) that is configured to disconnect and connect power transmission between a prime mover (13) and an output object (21) of a vehicle (1);
a clutch actuator (50) that is configured to operate the clutch device (26); and
a control unit (40) that is configured to control a drive of the clutch actuator (50);
wherein the control unit (40) has:
an automatic control mode (M1) that automatically operates the clutch device (26) by driving the clutch actuator (50); and
a manual control mode (M2) that manually operates the clutch device (26) by an operation input to a clutch operator (4b) operated by a driver, and
wherein the control unit (40) shifts to a forced manual control mode, which can select only the manual control mode (M2), according to a wear state of the clutch device (26).

2. The clutch control device according to claim 1, wherein the clutch device (26) transmits power by frictional engagement of a clutch plate (35), and
the control unit (40) shifts to the forced manual control mode when an amount of wear of the clutch plate (35) becomes a threshold value or more.

3. The clutch control device according to claim 1 or 2, further comprises an angle sensor (56d) configured to detect a rotation angle of a transmission element (56) of the clutch actuator (50), and
the control unit (40) shifts to the forced manual control mode when a value detected by the angle sensor (56d) has increased by a predetermined amount or more from an initial value at a time when a touch point (TP), at which the clutch device (26) starts connecting, has reached during a connection of the clutch device (26).

4. The clutch control device according to claim 1 or 2, wherein the control unit (40) shifts to the forced manual control mode from a next driving cycle via ON/OFF of a main switch of the vehicle (1) when the control unit (40) has determined that a set condition relating to a wear of the clutch device (26) is satisfied.

5. The clutch control device according to claim 1 or 2, wherein, when the vehicle (1) decelerates and when a gear shift position of the transmission (21) of the vehicle (1) is on a high speed side with respect to a vehicle speed, a notification is made to a driver that the gear shift position is on the high speed side.

6. The clutch control device according to claim 5, wherein, when the vehicle (1) starts traveling while the gear shift position remains on the high speed side, a notification is made to a driver that the transmission has the gear shift position on the high speed side.

7. The clutch control device according to claim 5, wherein, when the vehicle (1) starts traveling, the control unit (40) performs a half clutch control so that an engine rotation number becomes equal to or higher than a vehicle starting rotation number (Ne), and
the control unit (40) reduces the vehicle starting rotation number (Ne) when the vehicle (1) starts traveling while the gear shift position is kept on the high speed side, compared with a case where the vehicle (1) starts traveling when the gear shift position is on a low speed side.

8. The clutch control device according to claim 1 or 2, wherein a notification is made to a driver that the forced manual control mode is in effect while shifting to the forced manual control mode.
